# EUROPÄISCHE PATENTSCHRIFT

(11) **EP 2 740 687 B1**
(45) Veröffentlichungstag und Bekanntmachung des Hinweises auf die Patenterteilung: **11.01.2017**
(21) Anmeldenummer: 13193658.5
(22) Anmeldetag: 20.11.2013
(51) Int. Cl.: B65D 75/38, B65D 75/52, B65D 81/00, B29C 65/00, B29C 65/22, B29C 65/38, B29C 65/74

(54) **Verfahren zum Verpacken von Polysilicium**
Method of packing polysilicon
Méthode d'emballage de polysilicium

(30) Priorität: 04.12.2012 DE 102012222249
(43) Veröffentlichungstag der Anmeldung: 11.06.2014
(73) Patentinhaber: Wacker Chemie AG, 81737 München (DE)
(72) Erfinder: Wochner, Dr. Hanns, 84489 Burghausen (DE)
(74) Vertreter: Potten, Holger

(56) Entgegenhaltungen:
- EP-A1- 1 334 907
- WO-A1-98/23434
- WO-A1-2005/047135
- DE-A1-102007 027 110
- JP-A- 2012 101 838
- US-A- 4 565 720
- US-A- 5 561 964

## Beschreibung

Die Erfindung betrifft die Verpackung von Polysilicium, insbesondere von polykristallinem Siliciumbruch (Polysiliciumbruch).

Polysilicium wird beispielsweise mittels des Siemensverfahrens aus Trichlorsilan abgeschieden und danach idealer weise kontaminationsfrei zerkleinert. Ein Verfahren zum automatischen Brechen sowie eine entsprechende Vorrichtung sind in EP 1 645 333 A1 beschrieben.

Für Anwendungen in der Halbleiter- und Solarindustrie ist ein möglichst wenig kontaminierter Polysiliciumbruch erwünscht. Daher sollte das Material auch kontaminationsarm verpackt werden, bevor es zum Kunden transportiert wird.

Üblicherweise wird Polysilicium-Bruch für die Elektronikindustrie in 5 kg Beuteln mit einer Gewichtstoleranz von +/- F 50 g verpackt. Für die Solarindustrie ist Polysilicium-Bruch in Beuteln mit einer Einwaage von 10 kg und einer Gewichtstoleranz von +/- max. 100 g üblich.

Schlauchbeutelmaschinen, die zur Verpackung von Siliciumbruch prinzipiell geeignet sind, sind kommerziell erhältlich. Eine entsprechende Verpackungsmaschine ist beispielsweise in DE 36 40 520 A1 beschrieben.

Bei Polysilicium-Bruch handelt es sich um ein scharfkantiges, nicht rieselfähiges Schüttgut mit einem Gewicht der einzelnen Si-Bruchstücke von bis zu 2500 g. Daher ist bei der Verpackung darauf zu achten, dass das Material die üblichen Kunststoffbeutel beim Befüllen nicht durchstößt oder im schlimmsten Fall sogar vollständig zerstört. Um dies zu verhindern, sind die kommerziellen Verpackungsmaschinen zum Zwecke der Verpackung von Polysilicium in geeigneter Weise zu modifizieren.

Mit kommerziellen Verpackungsmaschinen ist es in der Regel nicht möglich, die Reinheitsanforderungen, die an Polysilicium-Bruch gestellt werden, einzuhalten, da die üblicherweise verwendeten Verbundfolien aufgrund der chemischen Zusätze zu erhöhten Verunreinigungen des Polysilicium-Bruchs führen können.

Aus EP 1 334 907 B1 ist eine Vorrichtung zum kostengünstigen vollautomatischen Transportieren, Abwägen, Portionieren, Einfüllen und Verpacken eines hochreinen Polysiliciumbruchs umfassend eine Förderrinne für den Polysiliciumbruch, eine Wägevorrichtung für den Polysiliciumbruch, welche mit einem Trichter verbunden ist, Ablenkbleche aus Silicium, eine Abfüllvorrichtung, welche aus einer hochreinen Kunststofffolie einen Kunststoffbeutel formt, umfassend einen Deionisierer, der eine statische Aufladung und damit eine Partikelverunreinigung der Kunststofffolie verhindert, eine Verschweißvorrichtung für den mit Polysiliciumbruch gefüllten Kunststoffbeutel, eine oberhalb von Förderrinne, Wägevorrichtung, Abfüllvorrichtung und Verschweißvorrichtung angebrachte Flowbox, die eine Partikelverunreinigung des Polysiliciumbruchs verhindert, ein Förderband mit einem magnetisch induktiven Detektor für den verschweißten mit Polysiliciumbruch gefüllten Kunststoffbeutel, wobei alle Bauteile, die mit dem Polysiliciumbruch in Kontakt kommen, mit Silicium armiert oder mit einem hochverschleißfestem Kunststoff verkleidet sind.

DE 10 2007 027 110 A1 beschreibt ein Verfahren zur Verpackung von polykristallinem Silicium, bei dem polykristallines Silicium mittels einer Abfüllvorrichtung in einen frei hängenden, fertig geformten, Beutel gefüllt wird, wobei der gefüllte Beutel anschließend verschlossen wird, dadurch gekennzeichnet, dass der Beutel aus hochreinem Kunststoff mit einer Wanddicke von 10 bis 1000 µm besteht. Vorzugsweise wird der mit polykristallinem Silicium gefüllte, verschlossene Kunststoffbeutel in einen weiteren Kunststoffbeutel aus PE mit einer Wanddicken von 10 bis 1000 µm eingebracht und dieser zweite Kunststoffbeutel verschlossen. Hier wird also der erste Beutel in einen zweiten Beutel gesteckt (Doppelbeutel).

Grundsätzlich gibt es zwei Formen von Beuteln, nämlich Flachbeutel und freistehende Beutel.

Folienschläuche können mittels eines Extruders erhalten werden. Extruder sind als Fördergeräte, die nach dem Funktionsprinzip des Schneckenförderers feste bis dickflüssige und extrudierbare Massen unter hohem Druck und hoher Temperatur gleichmäßig aus einer formgebenden Öffnung herauspressen, bekannt. Dieses Verfahren wird als Extrusion bezeichnet. Thermoplastische Polymere wie PVC, PE, PP sind als extrudierbare Werkstoffe bekannt.

Aus den so erhaltenen Folienschläuchen können durch Versiegeln und anschließenden Abtrennen vom Folienschlauch Beutel gefertigt werden. Solche Beutel sind auch vorkonfektioniert im Handel erhältlich.

Erfahrungen haben gezeigt, dass Beutel aus handelsüblichen PE-Folien mit undefinierten Eigenschaften, die mit Polysiliciumbruch befüllt wurden, beim Transport beschädigt werden. Der scharfkantige Siliciumbruch verursacht Beschädigungen z. B in Form von Durchstoßungen und aufgerissenen Schweißnähten.

Aus dieser Problematik ergab sich die Aufgabenstellung der Erfindung.

Die Erfindung wird gelöst durch ein Verfahren zum Verpacken von Polysilicium in einem Kunststoffbeutel durch Befüllen des Beutels mit Polysilicium und Verschweißen des Beutels nach Anspruch 1, wobei das Verschweißen durch Impulssiegelung erfolgt und der Anpressdruck durch Schweißbacken größer als 0,01 N/mm² beträgt und eine Schweißnaht mit einer Schweißnahtfestigkeit von 25-150 N/15 mm resultiert.

Beim Polysilicium handelt es sich um Bruchstücke von Polysilicium, wie die nach Abscheidung von Polysilicium in einem Siemensreaktor und nachfolgendem Zerkleinern der abgeschiedenen Polysiliciumstäbe vorliegen. Gegebenenfalls wurden die Bruchstücke vor dem Verpacken einer chemischen Reinigung unterzogen, um die Oberfläche der Bruchstücke z.B. von Metallkontaminationen zu befreien.

Der Beutel wird mittels eines Extruders aus einem PE-Folienschlauch erzeugt und versiegelt. Die Versiegelung des Beutels erfolgt vor dem Befüllen des Beutels mit Polysilicium mittels temperaturgeregelter Impulssiegelung. Dabei wird bei jedem Siegelvorgang die Siegeltemperatur geregelt, um reproduzierbare Siegelergebnisse und eine gleichbleibende Qualität der Siegelung, insbesondere im Dauerbetrieb mit hoher Taktleistung zu gewährleisten. Die Siegeltemperatur wird bei jedem Siegelvorgang fühlerlos durch eine elektrische Widerstandsmessung des Siegeldrahtes erfasst und entsprechend geregelt.

Durch die Siegelung erhält der Beutel seitliche Siegelnähte.

Das Verschweißen des mit Polysilicium befüllten PE-Beutels erfolgt vorzugsweise mit einem Heißsiegelschweißgerät, bei dem der metallische Schweißdraht mit einem nichtmetallischen Werkstoff, z. B. Polytetrafluorethylen (PTFE), ummantelt ist.

Das Schweißen beim Erzeugen der Beutel und nach dem Befüllen mit Polybruch erfolgt mit einer zeitgesteuerten temperaturgeregelten Impulssiegelung Werden zwei Schweißdrähte (Schweiß- und Trenndraht) verwendet, kann der überstehende Folienrest abgetrennt werden.

Die Parameter sind beim Extruder so einzustellen dass das Öffnen der Beutel die aus der Schlauchfolie durch konfektionieren erzeugt werden nicht durch Verblocken erschwert wird. Dies ist insbesondere die Abkühlung des Schlauches nach Verlassen des Extruders.

Um eine Streubreite der Schweißnahtfestigkeit von +/- 15 % zu erreichen, reicht eine zeitgesteuerte Impulssiegelung nicht aus. In diesem Fall ist eine zeitgesteuerte temperaturgeregelte Impulssiegelung notwendig.

Der Anpressdruck auf die Schweißstelle durch die Schweißbacken muss größer als 0,01 N/mm² betragen.

Zu stark verblockte Beutel können vor dem Befüllen so schwer geöffnet werden dass die Produktivität deutlich sinkt.

Vorzugsweise wird vor dem Verschweißen die Luft aus dem Beutel so lange abgesaugt, bis ein flacher, luftarmer Beutel entsteht.

Vor dem Verpacken wird das Polysilicium zunächst portioniert und gewogen. Dabei erfolgt die Portionierung und Einwaage des Polysilicium-Bruchs mittels einer Dosiereinheit.

Die Bestimmung der Steifigkeit im Biegemodul erfolgt nach DIN 53121. Biegemodul bezeichnet das Verhältnis der maximalen Faserspannung zur maximalen Dehnung innerhalb der Elastizitätsgrenze eines Spannungs-Dehnungsdiagramms, das in einem Biegeversuch erhalten wurde. Ein alternativer Begriff ist Biege-Elastizitätsmodul. Steifigkeit ist ein Maß für den Biegewiderstand von Kunststoffen. Er beinhaltet sowohl das plastische als auch das elastische Verhalten und ist damit eher ein scheinbarer Wert für den E-Modul anstatt eines wahren Wertes. (ASTM D-747)

Die Dynamische Durchstoßprüfung erfolgt nach DIN 53373. Prüfung von Kunststoff-Folien; Durchstoßversuch mit elektronischer Messwerterfassung.

Die Bestimmung der Folien-Reißfestigkeiten sowie der Folien Reißdehnung erfolgt nach DIN EN ISO - 527-3: Kunststoffe - Bestimmung der Zugeigenschaften.

Die Bestimmung der Folien Zugspannung bei 15 % Dehnung erfolgt nach DIN EN ISO - 527-3.

Die Bestimmung des Folien-Durchreißwiderstandes erfolgt nach Elmendorf (DIN EN 21974). Weiterreiß- und Durchreißverhalten von Folien, Durchreißwiderstand Elmendorf werden bestimmt nach ASTM D 1922/ DIN EN ISO 6383-2.

Die Bestimmung der Schweißnahtfestigkeit erfolgt nach DIN 55543-3, Bestimmung der Festigkeit von Längsnähten an Säcken und Beuteln.

### Beispiele

### Vergleichsbeispiel 1 - Verpacken in einen PE-Flachbeutel mit folgenden Folieneigenschaften

Dicke der Folie: 100 µm
Steifigkeit im Biegemodul: Fₘₐₓ = 100 mN; Fₜ = 50 mN
Dynamische Durchstoßprüfung:
   Schädigungskraft F = 100 N
   Schädigungsarbeit Ws = 1 J
   Durchstoßarbeit W_{ges} = 1 J

   Folien-Zugspannung bei 15 % Dehnung längs = 6 Mpa
   Folien-Zugspannung bei 15 % Dehnung quer = 5 MPa

   Folien-Durchreißwiderstand nach Elmendorf längs = 5 cN
   Folien-Durchreißwiderstand nach Elmendorf quer = 5 cN

   Folien-Reißdehnung längs: = 100 Prozent
   Folien-Reißdehnung quer: = 150 Prozent

Aus dieser PE-Folie wurden 60 PE-Beutel erzeugt und mit 5 kg Polybruch BG 4 mit einer Kantenlänge von 60 bis 150 mm befüllt.

Das Verschweißen erfolgte mit einer zeitgesteuerten temperaturgeregelten Impulssiegelung:
Temperatur: 200 Grad
Siegelzeit : 2 Sekunden
Anpressdruck durch die Schweißbacken: 0,01 N/mm²
Mittlere Schweißnahtfestigkeit: = 20 N/15 mm

In einen Karton wurden jeweils 6 Beutel eingebracht. Die 10 Kartons wurden auf einem LKW 2000 km durch Deutschland gefahren.

Nach dem Transport wurden die Beutel optisch auf beschädigte Schweißnähte und mit Hilfe der Wassertauchmethode auf Durchstoßungen untersucht.

Bei der Wassertauchmethode wird der mit Luft befüllte, entleerte Beutel in ein mit Wasser befülltes Becken eingetaucht. Undichtigkeiten im PE-Beutel werden durch aufsteigende Gasblasen sofort erkannt.
20 % der Schweißnähte sind während des Transports aufgegangen.
50 % der Beutel waren nach dem Transport nicht mehr dicht.

### Beispiel 1 - Verpacken in einen PE-Flachbeutel mit folgenden Folieneigenschaften

Dicke der Folie: 300 µm
Steifigkeit im Biegemodul: Fₘₐₓ = 500 mN; Fₜ = 200 mN
Dynamische Durchstoßprüfung:
   Schädigungskraft F = 300 N
   Schädigungsarbeit Ws = 4 J
   Durchstoßarbeit W_{ges} = 4,5 J
Folien-Zugspannung bei 15 % Dehnung längs = 12 MPa
Folien-Zugspannung bei 15 % Dehnung quer = 13 MPa
   Folien-Durchreißwiderstand nach Elmendorf längs = 15 cN
   Folien-Durchreißwiderstand nach Elmendorf quer = 25 cN

   Folien-Reißdehnung längs: = 500 Prozent
   Folien-Reißdehnung quer: = 700 Prozent

Aus dieser PE-Folie wurden 60 PE-Beutel erzeugt und mit 5 kg Polybruch BG 4 mit einer Kantenlänge von 60 bis 150 mm befüllt.

Das Verschweißen erfolgte mit einer zeitgesteuerten temperaturgeregelten Impulssiegelung:
Temperatur: 240 Grad
Siegelzeit : 4 Sekunden
Anpressdruck durch die Schweißbacken: 0,02 N/mm²
Mittlere Schweißnahtfestigkeit: = 45 N/15 mm

Die Schweißnahtfestigkeit streut bei den 60 PE-Beuteln um +/-15% gegenüber den Mittelwert.

In einen Karton wurden jeweils 6 Beutel eingebracht. Die 10 Kartons wurden auf einem LKW 2000 km durch Deutschland gefahren.

Nach dem Transport wurden die Beutel optisch auf beschädigte Schweißnähte und mit Hilfe der Wassertauchmethode auf Durchstoßungen untersucht.

0 % der Schweißnähte sind während dem Transport aufgegangen

0 % der Beutel waren nach dem Transport nicht mehr dicht.

### Beispiel 2 - Verpacken in einen PE-Flachbeutel mit folgenden Folieneigenschaften

Dicke der Folie: 300 µm
Steifigkeit im Biegemodul: Fₘₐₓ = 500 mN; Fₜ = 200 mN
Dynamische Durchstoßprüfung:
   Schädigungskraft F = 300 N
   Schädigungsarbeit Ws = 4 J
   Durchstoßarbeit W_{ges} = 4,5 J

   Folien-Zugspannung bei 15 % Dehnung längs = 12 MPa
   Folien-Zugspannung bei 15 % Dehnung quer = 13 MPa

   Folien-Durchreißwiderstand nach Elmendorf längs = 15 cN
   Folien-Durchreißwiderstand nach Elmendorf quer = 25 cN

   Folien-Reißdehnung längs: = 500 Prozent
   Folien-Reißdehnung quer: = 700 Prozent

Aus dieser PE-Folie wurden 60 PE-Beutel erzeugt und mit 5 kg Polybruch BG 4 mit einer Kantenlänge von 60 bis 150 mm befüllt.

Das Verschweißen erfolgte mit einer zeitgesteuerten Impulssiegelung ohne Temperaturregelung:
Siegelzeit : 4 Sekunden
Anpressdruck durch die Schweißbacken: 0,02 N/mm²
Schweißnahtfestigkeit: = 45 N/15 mm

Die Schweißnahtfestigkeit streut bei den 60 PE-Beuteln um +/-30 % gegenüber den Mittelwert.

In einen Karton wurden jeweils 6 Beutel eingebracht. Die 10 Kartons wurden auf einem LKW 2000 km durch Deutschland gefahren.

Nach dem Transport wurden die Beutel optisch auf beschädigte Schweißnähte und mit Hilfe der Wassertauchmethode auf Durchstoßungen untersucht.
5 % der Schweißnähte sind während dem Transport aufgegangen.
25 % der Beutel waren nach dem Transport nicht mehr dicht.

Die **Beispiele 1** und **2** zeigen eine deutliche Verbesserung gegenüber dem Vergleichsbeispiel. Diese Verbesserungen sind auf die veränderten Eigenschaften der Folie sowie auf die veränderte Schweißnahtfestigkeit zurückzuführen.

**Beispiel 1** zeigt die Vorteile der temperaturgeregelten Impulssiegelung. Dadurch ist es möglich, Beutel mit Polysiliciumbruch zur Verfügung zu stellen, die nach dem Transport keinerlei Undichtigkeiten oder Aufbrechen der Schweißnaht zeigen.

## Patentansprüche

1. Verfahren zum Verpacken von Polysilicium in einen Kunststoffbeutel durch Befüllen des Beutels mit Polysilicium und Verschweißen des Beutels, wobei der Beutel aus einer PE-Folie mit einer Dicke von 150-900 µm, einer Steifigkeit im Biegemodul Fₘₐₓ von 300-2000 mN und Fₜ 100-1300 mN, mit einer durch Dynamische Durchstoßprüfung ermittelten Schädigungskraft F von 200-1500 N, einer Schädigungsarbeit Ws von 2-30 J und einer Durchstoßarbeit W_{ges} von 2,2-30 J, mit einer Folien-Zugspannung bei 15 % Dehnung längs und quer von 9-50 MPa, mit einem Folien-Durchreiß-widerstand nach Elmendorf längs von 10-60 cN und einem Folien-Durchreißwiderstand nach Elmendorf quer von 18-60 cN, mit einer Folien-Reißdehnung längs von 300-2000 % und mit einer Folien-Reißdehnung quer von 450-3000 % besteht und mittels eines Extruders aus einem PE-Folienschlauch erzeugt wird, wobei der PE-Folienschlauch vor dem Befüllen mit Polysilicium mittels zeitgesteuerter temperaturgeregelter Impulssiegelung einseitig versiegelt wird und der so erzeugte Beutel mit Bruchstücken von Polysilicium gefüllt wird und der gefüllte Beutel anschließend verschweißt wird, das Verschweißen durch zeitgesteuerte temperaturgeregelte Impulssiegelung erfolgt und der Anpressdruck durch Schweißbacken größer als 0,01 N/mm² ist und eine Schweißnaht mit einer Schweißnahtfestigkeit von 25-150 N/15 mm resultiert.

2. Verfahren nach Anspruch 1, wobei das Verschweißen des mit Polysilicium befüllten PE-Beutels mit einem Heißsiegelschweißgerät mit einem metallischen Schweißdraht erfolgt, wobei der metallische Schweißdraht mit einem nichtmetallischen Werkstoff ummantelt ist.

3. Verfahren nach Anspruch 1 oder 2, wobei vor dem Verschweißen die Luft aus dem Beutel so lange abgesaugt wird, bis ein flacher, luftarmer Beutel entsteht.

## Claims

1. Method for packing polysilicon into a plastic bag by filling the bag with polysilicon and welding the bag, wherein the bag consists of a PE film having a thickness of 150-900 µm, a stiffness at the flexural modulus Fₘₐₓ of 300-2000 mN and Fₜ of 100-1300 mN, having a fracture force F determined by dynamic penetration testing of 200-1500 N, a fracture energy Ws of 2-30 J and a penetration energy Wₜₒₜ of 2.2-30 J, having a film tensile stress at 15% longitudinal and transverse elongation of 9-50 MPa, having an Elmendorf longitudinal film tear resistance of 10-60 cN and an Elmendorf transverse film tear resistance of 18-60 cN, having a longitudinal film elongation at break of 300-2000% and having a transverse film elongation at break of 450-3000% and is produced by means of an extruder from a tubular PE film, wherein the tubular PE film, prior to filling with polysilicon, is sealed at one end by means of time-controlled temperature-regulated pulse sealing and the bag thus produced is filled with chunks of polysilicon and the filled bag is then welded, the welding is effected by time-controlled temperature-regulated pulse sealing and the contact pressure applied by welding jaws is greater than 0.01 N/mm², resulting in a weld seam having a weld seam strength of 25-150 N/15 mm.

2. Method according to Claim 1, wherein the welding of the polysilicon-filled PE bag is effected with a heat-sealing welding device with a metallic weld wire, wherein the metallic weld wire is sheathed with a nonmetallic material.

3. Method according to Claim 1 or 2, wherein, prior to the welding, the air is sucked out of the bag until a flat bag containing little air is obtained.

## Revendications

1. Procédé pour l'emballage de polysilicium dans un sac en matière plastique, par remplissage du sac avec du polysilicium et scellage du sac,
dans lequel le sac est constitué d'un film de PE ayant une épaisseur de 150-900 µm, une rigidité dans le module de flexion Fₘₐₓ de 300 - 2 000 mN et Fₜ 100-1 300 mN, ayant une force d'endommagement F, déterminée par essai de perçage dynamique, de 200 - 1 500 N, un travail d'endommagement Wₛ de 2-30 J et un travail de perçage W_{ges} de 2,2-30 J, ayant une contrainte de traction du film à 15 % d'allongement longitudinalement et transversalement de 9-50 MPa, ayant une résistance à la déchirure du film selon Elmendorf longitudinalement de 10-60 cN et une résistance à la déchirure du film selon Elmendorf transversalement de 18-60 cN, ayant un allongement à la rupture du film longitudinalement de 300 - 2 000 % et ayant un allongement à la rupture du film transversalement de 450 - 3 000 % et est produit à partir d'un tube de film en PE au moyen d'une extrudeuse, dans lequel le tube de film en PE est scellé d'un côté, avant le remplissage avec du polysilicium, par scellage par impulsions réglé en température, commandé en fonction du temps et le sac ainsi produit est rempli de fragments de polysilicium et le sac rempli est ensuite soudé, le soudage s'effectue par scellage par impulsions réglé en température, commandé en fonction du temps et la pression de pressage par les mâchoires de soudage est supérieure à 0,01 N/mm² et il en résulte un joint soudé ayant une résistance de joint soudé de 25-150 N/15 mm.

2. Procédé selon la revendication 1, dans lequel le soudage du sac en PE rempli de polysilicium s'effectue à l'aide d'un appareil de thermoscellage avec un fil de soudure métallique, le fil de soudure métallique étant gainé avec un matériau non métallique.

3. Procédé selon la revendication 1 ou 2, dans lequel avant le soudage on aspire l'air du sac jusqu'à ce qu'il en résulte un sac plat, contenant peu d'air.
